(19) **Europäisches Patentamt European Patent Office Office européen des brevets**

(11) **EP 2 743 446 A1**

(12) **DEMANDE DE BREVET EUROPEEN**

(43) Date de publication:
**18.06.2014 Bulletin 2014/25**

(51) Int Cl.:
*E21B 43/26* [(2006.01)]    *E21B 49/00* [(2006.01)]

(21) Numéro de dépôt: **13306684.5**

(22) Date de dépôt: **09.12.2013**

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**
Etats d'extension désignés:
**BA ME**

(30) Priorité: **12.12.2012 FR 1202893**

(71) Demandeur: **IFP Energies nouvelles 92852 Rueil Malmaison Cedex (FR)**

(72) Inventeurs:
• **Bourbiaux, Bernard 92500 Rueil Malmaison (FR)**
• **Fourno, Andre 92500 Rueil-Malmaison (FR)**

(54) **Procédé d'évaluation et de sélection d'une stratégie de récuperation améliorée d'hydrocarbures pour réservoirs fracturés**

(57)    - Procédé pour évaluer un potentiel de récupération d'hydrocarbures contenus dans un réservoir fracturé, par une technique de récupération améliorée.
- On acquiert des données caractéristiques du réservoir, des données issues de résultats de tests de puits et des données relatives aux conditions d'exploitation. Puis, on estime un gradient de pression lié à l'écoulement d'un fluide injecté pour aider la récupération, à partir des données acquises précédemment. On calcule un coefficient de récupération des hydrocarbures initialement en place dans lesdits blocs matriciels, en estimant la saturation en eau pour un état d'équilibre du bloc matriciel. Enfin, on estime le temps de récupération des hydrocarbures sous l'effet de la circulation du fluide dans lesdites fractures, en déterminant le temps requis pour passer de l'état initial à l'état d'équilibre du bloc matriciel.

EP 2 743 446 A1

# EP 2 743 446 A1

**Description**

Le domaine de la présente invention concerne la récupération d'hydrocarbures de réservoirs fracturés, dont la majeure partie de l'accumulation est renfermée dans des blocs matriciels poreux limités par des fractures.

Dans le cas de réservoirs fracturés peu ou pas mouillables à l'eau, l'injection d'eau se révèle souvent inefficace car les forces capillaires retiennent l'huile au sein des blocs matriciels.

L'ajout d'un additif chimique à l'eau d'injection peut alors être envisagé afin de modifier les propriétés interfaciales du système eau-huile-roche, suivant deux modes d'action potentiels :

- réduction de l'intensité des forces capillaires par réduction de la tension interfaciale eau-huile ;

- restauration de forces capillaires motrices par inversion de la mouillabilité de la roche, redevenant mouillable à l'eau dans le cas présent.

L'injection d'additifs accroissant la viscosité de l'eau injectée peut aussi être envisagée afin d'accroître le gradient de pression au sein du fluide circulant dans les fractures et ainsi entraîner l'huile des blocs matriciels par effet visqueux.

Le cas échéant, il est également possible de recourir à un autre procédé de récupération, impliquant l'injection d'un gaz seul ou en combinaison avec une phase aqueuse et/ou un agent chimique (injection alternée eau/gaz ou de mousse par exemple).

Cependant, la sélection et la mise en oeuvre de l'un ou l'autre de ces multiples procédés de récupération améliorée passent d'abord par une évaluation suffisante du contexte du réservoir à l'étude et des effets des mécanismes de production dont il est déjà le siège.

Il s'agit notamment d'estimer l'impact des mécanismes physiques susceptibles de permettre l'expulsion d'huile des blocs matriciels à savoir, dans le cas d'une production par injection d'un fluide (eau le plus souvent) maintenant la pression : (a) les forces de gravité reliée à la hauteur présumée des blocs, (b) le déplacement forcé (visqueux) au sein des blocs associé à la circulation du fluide injecté et/ou produit dans les fractures, également dans certains cas (c) les échanges par diffusion causés par d'éventuels gradients de composition entre fissure et matrice. Le mécanisme d'expansion associé à la compressibilité des fluides et de la roche peut aussi intervenir si la pression et/ou la température du réservoir varient au cours de la production. Les forces de capillarité ne sont pas mentionnées comme mécanisme favorable à la récupération car on s'adresse ici à des réservoirs préférentiellement mouillés par l'huile, les plus fréquemment rencontrés en contexte carbonaté.

Une évaluation de ces différents mécanismes de récupération, notamment des effets gravitaires et des effets visqueux susceptibles de compenser les effets adverses d'une capillarité défavorable dans le cas d'une injection d'eau en milieu fracturé mouillable à l'huile, est essentielle pour orienter le choix de l'ingénieur de réservoir vers un procédé de récupération améliorée qui amplifie ou restaure l'impact bénéfique de l'un ou l'autre de ces mécanismes. Il peut notamment s'agir d'un procédé chimique impliquant l'ajout d'un additif chimique au fluide d'injection le plus souvent à base d'eau.

Cette évaluation préalable permet d'une part de sélectionner une stratégie de récupération améliorée, d'autre part de focaliser d'emblée les moyens et efforts sur le dimensionnement et l'optimisation du ou des quelques procédé(s) remplissant le cahier des charges de la stratégie de récupération améliorée retenue.

On connaît des procédés pour évaluer la récupération en hydrocarbures de champs pétroliers fracturés. Ces procédés sont fondés sur des approches statistiques, analytiques, expérimentales et/ou numériques. De tels procédés sont décrits par exemple dans les documents suivants :

- Reis, J.C. : "Oil Recovery Mechanisms in Fractured Reservoirs During Steam Injection", paper SPE 20204 presented at the SPE/DOE EOR Conference, 22-25 April 1990, Tulsa, OK.

- Jack Allan and S. Qing Sun: Controls on Recovery Factor in Fractured Reservoirs: Lessons Learned from 100 Fractured Fields, paper SPE 84590 presented at the 2003 SPE Ann. Tech. Conf. & Exh. held in Denver, Co., USA, 5-8 Oct. 2003.

- Barbara Pirker, Georg M. Mittermeir and Zoltan E. Heinemann: "Numerivally-Derived Type Curves for Assessing Matrix Recovery Factors", paper SPE 107074 presented at the SPE Europec/EAGE Ann. Conf. & Exh. held in London, UK, 11-14 June 2007.

- R. Gupta, B. Adibhatla and K.K. Mohanty: Parametric Study to Enhance Oil Recovery Rate From Fractured Oil-Wet Carbonate Reservoirs, paper SPE 116485 presented at the 2008 SPE Ann. Tech. Conf. & Exh. held in Denver, Co.,

USA, 21-24 Sept. 2008.

- B. Bourbiaux: "Understanding the Oil Recovery Challenge of Water Drive Fractured Reservoirs", paper IPTC 13909 presented at the International Petroleum Technology Conference, 7-9 December 2009, Doha, Qatar.

- Nicolas Legrand, Joop de Kok, Pascale Neff, and Torsten Clemens, OMV E&P: "Recovery Mechanisms and Oil Recovery From a Tight, Fractured Basement Reservoir, Yemen", SPE Reservoir Evaluation & Engineering, August 2011.

On connaît également les demandes de brevet W010002680 et W010138558, portant sur des procédés pour évaluer une technique de récupération améliorée d'hydrocarbures.

Cependant, toutes ces procédés nécessitent un grand nombre d'informations, parfois difficiles à obtenir, et/ou font généralement appel à des simulations de réservoir. De ce fait, ces procédés sont longs et complexes à mettre en oeuvre.

De plus, pour les réservoirs fracturés types, le problème de récupération se pose spécifiquement à l'échelle du bloc matriciel, car ces blocs matriciels renferment la quasi-totalité de l'huile et sont court-circuités par les fractures.

Ainsi, l'objet de la présente invention concerne un procédé pour évaluer le potentiel de récupération des hydrocarbures contenus dans des blocs matriciels poreux d'un réservoir fracturé, afin d'orienter le choix d'une méthode de récupération améliorée adaptée au contexte du cas de champ à l'étude. La simplicité et le caractère pratique/réaliste du procédé résident dans la définition d'une ou quelques géométries de blocs matriciels représentatifs (déduite(s) de la caractérisation géologique des fractures), l'estimation des conditions d'écoulement dans les fractures déduites des résultats (perméabilité du réseau de fractures) de tests de puits (mesures *a priori* toujours disponibles), enfin l'évaluation quantitative des taux et cinétique de récupération des blocs poreux obtenues par injection d'un fluide circulant préférentiellement dans le réseau de fractures limitant ces blocs.

Ces ordres de grandeur permettent de choisir une stratégie de récupération améliorée adaptée au réservoir considéré, puis de cibler un procédé de récupération mettant le mieux en oeuvre cette stratégie.

L'invention s'adresse en particulier aux réservoirs fracturés dont le pronostic de récupération est a priori défavorable, notamment les réservoirs fracturés préférentiellement mouillés par l'huile et dont la pression est maintenue par injection d'eau. Toutefois, le procédé selon l'invention s'applique quelle que soit la mouillabilité (à l'eau ou à l'huile) du réservoir considéré. Cette pré-sélection repose sur les résultats d'une évaluation quantitative des échanges matrice-fracture à partir d'un nombre minimal d'informations normalement mises à disposition et/ou accessibles à l'ingénieur de réservoir. Ces informations sont issues des étapes classiques de caractérisation et acquisition de données qui procurent une connaissance de la structure (incluant la présence ou non de fractures) du réservoir, du contenu en faciès (incluant les propriétés pétrophysiques du milieu matriciel déterminées à partir des logs et/ou sur les carottes), du contenu en fluides, ainsi que du comportement du réservoir à l'écoulement (identifié par les tests de puits).

**Le procédé selon l'invention**

De façon générale, l'invention concerne un procédé pour évaluer un potentiel de récupération d'hydrocarbures contenus dans des blocs matriciels poreux d'un réservoir fracturé, lesdits blocs étant limités par des fractures, au moyen d'une technique de récupération améliorée au cours de laquelle on injecte un fluide au sein dudit réservoir. Le procédé comporte les étapes suivantes pour au moins un bloc matriciel :

i) on acquiert des données caractéristiques dudit réservoir, des données issues de tests de puits et des données relatives à des conditions d'exploitation dudit réservoir;

ii) on estime un gradient de pression (Gx) lié à un écoulement dudit fluide dans lesdites fractures, à partir de données acquises à l'étape i) ;

iii) on calcule un coefficient de récupération (CR) des hydrocarbures initialement en place dans lesdits blocs, en estimant une saturation en fluide pour un état d'équilibre du bloc matriciel, à partir dudit gradient de pression (Gx) et de données acquises à l'étape i) ;

iv) on estime un temps de récupération des hydrocarbures sous l'effet de l'écoulement dudit fluide dans lesdites fractures, en déterminant un temps requis pour passer d'un état initial audit état d'équilibre du bloc matriciel, par application des lois de déplacement diphasique, à partir dudit gradient de pression (Gx) et de données acquises à l'étape i).

Selon l'invention, on peut estimer le gradient de pression ($G_x$) au moyen des données suivantes :

- la vitesse de Darcy (u) du fluide au sein de la dite fracture ;
- la viscosité ($\mu$) dudit fluide ;
- la perméabilité de fracture ($k_{test}$) issue d'un test de puits.

On peut calculer la saturation en eau à l'équilibre au moyen des données suivantes :

- le contraste de masse volumique des fluides déplaçant et déplacé ;
- le pendage ($\alpha$) du bloc matriciel ;
- ledit gradient de pression ($G_x$) ;
- la dimension du bloc matriciel ($l_x$) dans la direction (x) d'écoulement de fracture.

On peut estimer le temps de récupération de l'huile au moyen des données suivantes :

- les propriétés des fluides et les propriétés pétrophysiques d'écoulement au sein des blocs matriciels, telles que : porosité et perméabilité matricielle, saturations initiales, pressions capillaires et perméabilités relatives ;

- la dimension du bloc matriciel ($l_x$) ;

- les conditions d'écoulement imposées dans ladite fracture, *i.e.* la différence de pression $\left( \Delta p_w^f = G_x l_x \right)$ ;

- la saturation d'équilibre final des blocs matriciels.

L'invention concerne également un procédé de récupération améliorée d'hydrocarbures contenus dans des blocs matriciels poreux d'un réservoir fracturé, lesdits blocs étant limités par des fractures, dans lequel on injecte un fluide au sein dudit réservoir. Le procédé comporte les étapes suivantes pour au moins un bloc matriciel :

a) on sélectionne un ensemble de stratégies de récupération améliorée d'hydrocarbures ; et pour chaque stratégie :

b) on détermine un coefficient de récupération (CR) d'hydrocarbures et un temps de récupération au moyen du procédé selon l'invention ;

c) on sélectionne la stratégie de récupération améliorée permettant d'obtenir un coefficient de récupération (CR) d'hydrocarbures maximal pour un temps de récupération minimal.

d) on met en oeuvre ladite stratégie sélectionnée.

Enfin, selon l'invention, la stratégie de récupération améliorée peut être choisie parmi les stratégies suivantes : accroître ledit gradient de pression, (Gx) ; annuler la capillarité matricielle ; inverser la mouillabilité de la matrice. On peut accroître ledit gradient de pression, (Gx) en faisant circuler un fluide visqueux dans les fractures. On peut annuler la capillarité matricielle en ajoutant au moins un agent chimique au fluide d'injection. On peut inverser la mouillabilité de la matrice en ajoutant au moins un agent chimique au fluide d'injection.

D'autres caractéristiques et avantages du procédé selon l'invention, apparaîtront à la lecture de la description ci-après d'exemples non limitatifs de réalisations, en se référant aux figures annexées et décrites ci-après.

**Présentation succincte des figures**

- La figure 1 schématise les différentes étapes d'un mode de réalisation du procédé selon l'invention.

- La figure 2 est une illustration schématisée d'un bloc matriciel (BM).

**Description détaillée du procédé**

Le procédé selon l'invention permet d'évaluer un potentiel de récupération d'hydrocarbures, c'est-à-dire la quantité d'hydrocarbures (huile par exemple) que l'on peut extraire de blocs poreux par injection d'un fluide de balayage (technique de récupération améliorée), ainsi que le temps nécessaire à cette extraction. Ce procédé peut être utilisé pour choisir une stratégie de récupération améliorée d'huile en place dans un réservoir fracturé.

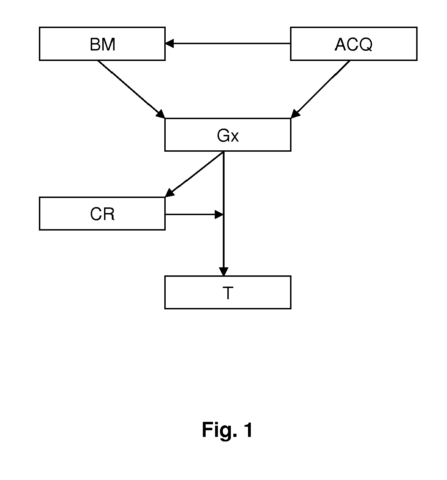

La figure 1 schématise les différentes étapes d'un mode de réalisation du procédé selon l'invention :

1. Acquisition/collecte de données caractéristiques du réservoir fracturé (ACQ)

2. Construction d'une représentation du réservoir fracturé (BM)

3. Estimation du gradient de pression dans le réseau de fractures (Gx)

4. Détermination du coefficient de récupération de l'huile initialement en place (CR)

5. Estimation du temps de récupération de l'huile (T)

Les étapes de ce mode de réalisation sont détaillées ci-après, dans le cas particulier où le fluide injecté est de l'eau.

## 1. Acquisition de données caractéristiques du réservoir fracturé.

Les données requises pour construire une représentation du réservoir fracturé sont habituellement connues à l'issue de la phase de reconnaissance du réservoir préalablement à sa mise en exploitation.

Elles comprennent notamment :

a)- Données caractéristiques dudit réservoir :

- données de fracturation
  Ces données peuvent être les dimensions (ou longueurs) caractéristiques de bloc matriciel. Elles sont notées $l_i$ dans la direction $i$. Elles sont déduites des espacements moyens entre fractures et/ou des espacements entre discontinuités (joints entre bancs par exemple) du milieu matriciel.
- propriétés de matrice et des fluides
  Ces propriétés de matrice peuvent être choisies parmi : perméabilité $k_m$, porosité, saturations initiales en fluides, courbes de pression capillaire et de perméabilité relative aux fluides en présence.
  Les propriétés des fluides peuvent être les viscosités et/ou masses volumiques.
- conditions de circulation des fluides dans les fractures.
  Les données relatives aux conditions de circulation des fluides dans les fractures peuvent être des vitesses ou des débits de fluide.

b)- Données issues de résultats de tests de puits.
Il peut s'agir des perméabilités. La perméabilité de test de puits $k_{test}$ permet d'attester le contraste d'écoulement entre fractures et matrice (dans le cas d'un réservoir fracturé, $k_{test}$ est d'au moins un ordre de grandeur supérieur à la perméabilité $k_m$ du milieu matriciel.
c)- Données relatives à des conditions d'exploitation dudit réservoir
Il peut s'agir des vitesses ou des débits de fluide.

Pour les données comportant une certaine dispersion, un intervalle de valeurs peut être collecté au lieu d'une valeur moyenne. Cette collecte est réalisée pour chaque zone du réservoir si celui-ci s'avère hétérogène du point de vue de ces propriétés de fracturation et de faciès.

## 2. Construction d'une représentation du réservoir fracturé

L'étape de construction d'une représentation du réservoir fracturé est facultative. La pratique courante en usage dans la profession consiste à représenter un réservoir fracturé par un ensemble de blocs matriciels délimités par des fractures.

Le document suivant décrit un procédé pour construire de tels blocs matriciels :

- Bourbiaux, B., Cacas, M.C., Sarda, S. and Sabathier, J.C. 1998, *A Rapid and Efficient Methodology to Convert Fractured Reservoir Images into a Dual-Porosity Model, Revue de l'IFP*, Vol. 53, No. 6, Nov.-Déc. 1998, 785-799

Ces blocs matriciels sont alors représentatifs du réservoir fracturé considéré, dans les conditions habituelles ou connues d'exploitation du réservoir.

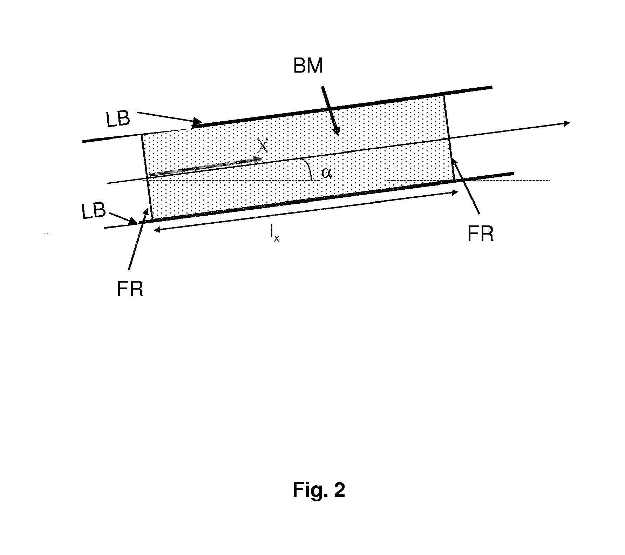

La figure 2 est une illustration schématisée d'un tel bloc matriciel (BM). Ce bloc poreux représente la roche du réservoir. Il est délimité au-dessus et en-dessous par les limites de banc (couche sédimentaire par exemple, ou fracture...) notées LB. Ce bloc matriciel est délimité latéralement par des plans de fracture (FR) interrompus ou non par les limites de banc. Ce bloc possède un pendage $\alpha$ par rapport à l'horizontal. Il s'agit par exemple du pendage de la couche sédimentaire à laquelle appartient le bloc matriciel. Ce bloc matriciel possède une longueur $l_x$ dans la direction d'écoulement des fluides, direction notée X.

### 3. Estimation du gradient de pression lié à l'écoulement dans le réseau de fractures

On estime, à partir des données acquises à l'étape 1, le gradient de pression créé par l'écoulement de fluide au sein des fractures qui limitent les blocs matriciels : il s'agit de la variation de pression par unité de parcours du fluide se déplaçant dans les fractures (unité égale au mbar par mètre par exemple). On note $G_x$ ce gradient dans la direction X : au gradient $G_x$ correspond ainsi une différence de pression $\Delta P_f$ égale à $G_x l_x$ entre les deux extrémités d'un bloc représentatif de longueur $l_x$ (les dimensions de bloc étant issues des étapes 1 et/ou 2).

Ce gradient de pression, appelé également gradient de charge visqueuse. induit un déplacement des fluides saturant les blocs matriciels que nous évaluons aux étapes suivantes. Le gradient $G_x$ est nul en l'absence d'écoulement au sein des fractures.

La loi de Darcy permet de calculer ce gradient de pression en fonction de la vitesse estimée du fluide circulant dans les fractures, suivant la méthode indiquée ci-après.

Concrètement, dans le cas d'une exploitation par injection d'eau par exemple, les conditions d'exploitation consistent en une vitesse type de progression de l'eau au sein du réservoir, conforme à la durée de déplacement réaliste souhaitée entre puits injecteur et puits producteur. Cette vitesse, rapport entre le débit et la section de réservoir, est appelée vitesse de filtration ou vitesse de Darcy, et est notée $u_x$ dans la direction d'écoulement X. La loi Darcy permet, au moyen des données acquises, de relier cette vitesse au gradient de pression $G_x$ lié à l'écoulement dans la fracture, comme suit :

$$u_x = \frac{k_f}{\mu_w} G_x \approx \frac{k_{test}}{\mu_w} G_x$$

On en déduit le gradient de pression recherché :

$$G_x = \frac{\Delta P_f}{l_x} \approx \frac{\mu_w}{k_{test}} u_x$$

Avec :

$k_{test}$ : la perméabilité de test de puits (connue à l'issue de l'étape 1)
$u_x$ : vitesse de filtration dans la direction $X$
$\mu_w$ : viscosité du fluide déplaçant (eau pour cet exemple) injecté.

L'approximation $k_f \approx k_{test}$ tient au fait que pour un réservoir fracturé, la perméabilité de fracture est toujours d'un ou plusieurs ordres de grandeur supérieure à la perméabilité de matrice $k_m$.

Application : pour les données suivantes

- $\mu_w$ = 0.4 cp,
- $k_f \approx k_{test}$ = 100 md,
- et une vitesse de Darcy (en milieu supposé homogène balayé uniformément) égale à 0.03 m/jour,

on détermine une valeur du gradient de pression lié à l'écoulement dans le réseau de fractures égale à 14 mbar/m.

A l'issue de cette étape, on connaît donc le gradient de pression régnant dans le réseau de fracture.

## 4. Détermination du coefficient CR de récupération de l'huile initialement en place

Le coefficient de récupération (CR) de l'huile initialement en place dans un bloc matriciel est un rapport exprimant la quantité qu'on peut extraire d'un bloc matriciel par injection d'un fluide de balayage (eau dans notre exemple). Cette quantité peut s'exprimer en fraction du volume de pores du bloc matriciel, ou en fraction du volume d'huile initialement en place dans le bloc.

Le coefficient de récupération se déduit de la saturation d'équilibre du bloc matriciel obtenue par circulation du fluide dans les fractures qui l'entourent. Nous décrivons ci-après le mécanisme de production de l'huile contenue dans le bloc avant d'expliciter la méthode de calcul de ladite saturation d'équilibre.

L'écoulement dans les fractures initié par l'injection d'eau induit un déplacement de l'huile saturant les blocs matriciels et une expulsion de cette huile dans les fractures, où elle est emmenée vers les puits producteurs par le flux d'eau circulant. Cette production d'huile, qui cesse après un certain temps, conduit à un état d'équilibre du bloc dans lequel la distribution des fluides (i.e. les saturations locales d'eau et d'huile) ne varie plus au cours du temps en tout point du bloc. La différence entre la saturation en eau moyenne du bloc parvenu à cet état d'équilibre et sa saturation initiale moyenne avant injection d'eau correspond à la récupération d'huile (exprimée en fraction du volume des pores). Si $S_{wi}$ est la saturation initiale moyenne du bloc et $\overline{S_{weq}}$ sa saturation moyenne à l'équilibre, la récupération d'huile vaut donc $\overline{S_{weq}}$ - $S_{wi}$ (en fraction du volume des pores du bloc matriciel) ou $\dfrac{\overline{S_{weq}} - S_{wi}}{1 - S_{wi}}$ en fraction de l'huile initialement en place dans le bloc. Nous indiquons ci-après comment estimer la saturation d'équilibre $\overline{S_{weq}}$.

Ce calcul d'équilibre tient compte d'une part des propriétés capillaires de la matrice et de la fracture et du contraste de masse volumique des fluides déplaçant et déplacé (données issues de l'étape 1), d'autre part de la perte de charge visqueuse appliquée sur le bloc (issue de l'étape 3) en raison de l'écoulement de fluide dans les fractures.

Concrètement, à une dimension, en reprenant le schéma du bloc représentatif tel qu'illustré par la figure 2, on détermine la saturation d'équilibre en tout point d'abscisse $x$ puis, par intégration le long du bloc de longueur $l_x$ (longueur connue d'après les étapes 1 et/ou 2), la saturation moyenne du bloc matriciel à l'équilibre, dont on déduit la récupération finale d'huile qu'il est ainsi possible d'obtenir par circulation de fluide(s) dans les fractures. Un calcul analogue à deux dimensions (intégré sur la hauteur du bloc) peut être réalisé pour plus de précision.

Dans le cas d'une injection d'eau, la saturation d'équilibre en l'abscisse x du bloc peut être évaluée suivant la formule analytique suivante (écrite à une dimension) :

$$S_{weq}(x) = S_w \left\{ p_c^m = [ -\frac{\Delta p_w^f}{l_x} - (\rho_w - \rho_o) g \sin(\alpha)](l_x - x) \right\}$$

où $\dfrac{\Delta p_w^f}{l_x}$ est égal au gradient de pression $G_x$ déterminé à l'étape 3 et où $\alpha$ est le pendage (angle d'inclinaison par rapport à l'horizontale) des blocs (connu à l'étape 1).

$S_{weq}(x)$ s'obtient par lecture inverse de la courbe de pression capillaire de la matrice $p_c^m(S_w)$ (connues à l'étape 1) pour la valeur de pression capillaire égale à $-\dfrac{\Delta p_w^f}{l_x}(l_x - x) - (\rho_w - \rho_o) g \sin(\alpha)(l_x - x)$ représentant les contributions respectives du gradient de pression visqueux au sein de la fracture (estimé à l'étape 3) et de la charge gravitaire. La pression capillaire de fracture a ici été supposée négligeable car cette approximation est fréquente en pratique, toutefois elle peut être intégrée dans ce calcul.

Par intégration de 0 à $l_x$, on obtient la saturation moyenne d'équilibre du bloc $\overline{S_{weq}}$ :

$$\overline{S_{weq}} = \frac{1}{l_x} \int_0^{l_x} S_w(X) dX$$

dont on déduit le coefficient de récupération (CR), c'est-à-dire la quantité relative d'huile qu'il est possible d'obtenir par circulation de fluide(s) dans les fractures.

## 5. Estimation du temps T de récupération de l'huile.

Au cours de cette étape, on estime le temps requis pour passer de l'état initial à l'état d'équilibre du bloc matriciel, c'est-à-dire la durée de récupération de l'huile du bloc mobilisable sous l'effet de la circulation d'eau dans les fractures.

La quantité d'huile récupérable est estimée à l'étape 4. Elle est égale à $\overline{S_{weq}}$ - $S_{wi}$ en fraction du volume des pores du bloc matriciel.

La durée de récupération est estimée par application des lois connues de déplacement diphasique au moyen des données suivantes :

- propriétés des fluides et propriétés pétrophysiques d'écoulement diphasique au sein de la matrice (notamment la perméabilité matricielle, les courbes de pression capillaire et de perméabilité relative issues de l'étape 1) ;
- conditions d'écoulement dans les fractures, connues à l'issue des étapes 1 et 3,
- saturation d'équilibre final des blocs matriciels représentatifs du réservoir issue de l'étape 4.

Par exemple, dans le cas d'une injection d'eau, la durée totale T de déplacement de l'huile déplaçable d'un bloc matriciel de longueur $l_x$, peut être estimée suivant la formule analytique suivante :

$$T = \frac{\phi_m(\overline{S_{weq}} - S_{wi})(\frac{\mu_w}{\overline{kr_w(S_{weq})}} + \frac{\mu_o}{kr_{o\,max}})l_x^2}{2\,k_m\left[\Delta p_w^f + P_c(\overline{S_{weq}}) + \Delta\rho g\frac{l_x}{2}\sin(\alpha)\right]}$$

au moyen des données (de matrice) de porosité $\phi_m$, perméabilité $k_m$, pression capillaire $P_c$ et perméabilités relatives $kr_w$, $kr_o$ aux fluides saturant le milieu matriciel (données issues de l'étape 1), des données des fluides (viscosités ($\mu_w$, $\mu_o$) et contraste de masse volumique ($\Delta\rho$) des deux fluides, également issus de l'étape 1), de la longueur de bloc $l_x$ (donnée issue de l'étape 1 et/ou 2), de la différence de pression $\Delta p_w^f = G_x l_x$ liée à l'écoulement au sein des fractures (avec $G_x$ issu de l'étape 3), et enfin des valeurs de saturation initiale du bloc ($S_{wi}$, issue de l'étape 1) et à l'équilibre ($\overline{S_{weq}}$, issue de l'étape 4).

Cette estimation de durée de déplacement T est en pratique effectuée pour des valeurs de $l_x$ couvrant la gamme des dimensions de blocs caractérisés et modélisés à l'issue des étapes 1 et/ou 2.

## Application du procédé : choix d'une stratégie de récupération améliorée

Ce choix est réalisé par analyse de l'estimation du niveau de récupération (CR) et du temps (T) nécessaire à sa production, représentatifs de chaque zone du réservoir à l'étude, obtenue suivant au moins les étapes 1, 3, 4 et 5 du procédé selon l'invention.

Pour ce faire, on réitère les étapes 4 et 5 du procédé, en faisant varier divers paramètres opératoires guidant le choix d'une stratégie de récupération, laquelle stratégie peut par exemple (et de manière non exclusive) consister à :

- accroître le gradient de pression imposé par l'écoulement de fracture, ce qui, sur le plan opératoire, peut être réalisé en faisant circuler un fluide visqueux dans les fractures ;

- annuler la capillarité matricielle (responsable de la rétention d'huile au sein des blocs de matrice dans le cas de réservoirs fracturés préférentiellement mouillés par l'huile), ce qui, sur le plan opératoire, peut être réalisé en ajoutant au moins un agent chimique spécifique (tensio-actif, agent alcalin, ...) au fluide d'injection.

- inverser la mouillabilité de la matrice (exprimé par le changement de signe de la pression capillaire de matrice), ce qui, sur le plan opératoire, peut être également réalisé en ajoutant au moins un agent chimique spécifique (tensio-actif, agent alcalin, ...) au fluide d'injection.

Les niveaux de récupération et les temps de production du bloc matriciel représentatif de chaque zone du réservoir à l'étude, ainsi estimés suivant l'invention, permettent finalement à l'ingénieur d'exploitation de retenir la stratégie de récupération la plus prometteuse, déterminée par le couple (récupération-temps de production) réalisant le meilleur compromis technico-économique.

A l'issue de ce choix d'une stratégie de récupération, les études de mise en oeuvre de cette dernière peuvent être entreprises. Elles ont désormais l'avantage d'être ciblées sur le procédé ou quelques procédés de récupération remplissant le "cahier des charges" de la stratégie de récupération retenue. Par exemple, reprenant les stratégies citées plus haut, la mise en oeuvre pourra de manière non exhaustive consister à :

- dimensionner (en concentration de produit, débit, schéma d'injection, etc.) un procédé d'injection d'une solution de polymère accroissant le gradient de pression au sein du réseau de fractures,

- dimensionner de même un procédé d'injection d'une solution de tensio-actif réduisant la tension interfaciale eau-huile ou inversant la mouillabilité de la matrice,

- dimensionner des combinaisons appropriées de tels procédés.

Concrètement, le dimensionnement porte sur divers paramètres opératoires tels que la concentration de produit, le débit d'injection, le schéma d'injection (architecture et espacement/disposition des puits injecteurs et producteurs), le choix des valeurs de ces paramètres passant par la simulation du ou des procédé(s) retenu(s) au moyen de modèles numériques construits aux échelles, allant de celle du bloc matriciel représentatif à celle du réservoir entier en passant par la section représentative de réservoir et/ou l'échelle du pilote le cas échéant.

L'invention concerne également un procédé de récupération améliorée d'hydrocarbures contenus dans des blocs matriciels poreux d'un réservoir fracturé. Ce procédé comporte les étapes suivantes pour au moins un bloc matriciel :

a) on sélectionne un ensemble de stratégies de récupération améliorée d'hydrocarbures ; et pour chaque stratégie :

b) au moyen du procédé selon l'invention, on détermine un coefficient de récupération (CR) d'hydrocarbures et un temps de récupération ;

c) on sélectionne la stratégie de récupération améliorée permettant de maximiser le coefficient de récupération (CR) d'hydrocarbures avec un temps de récupération minimal ;

d) on met en oeuvre ladite stratégie sélectionnée.

**Revendications**

**1.** Procédé pour évaluer un potentiel de récupération d'hydrocarbures contenus dans des blocs matriciels d'un réservoir fracturé, lesdits blocs matriciels étant limités par des fractures, au moyen d'une technique de récupération améliorée au cours de laquelle on injecte un fluide au sein dudit réservoir, **caractérisé en ce que** l'on réalise les étapes suivantes pour au moins un bloc matriciel :

i) on acquiert des données caractéristiques dudit réservoir, des données issues de tests de puits et des données relatives à des conditions d'exploitation dudit réservoir;
ii) on estime un gradient de pression (Gx) lié à un écoulement dudit fluide dans lesdites fractures, à partir de données acquises à l'étape i) ;
iii) on calcule un coefficient de récupération (CR) des hydrocarbures initialement en place dans lesdits blocs matriciels, en estimant une saturation en fluide pour un état d'équilibre du bloc matriciel, à partir dudit gradient de pression (Gx) et de données acquises à l'étape i) ;
iv) on estime un temps de récupération des hydrocarbures sous l'effet de l'écoulement dudit fluide dans lesdites fractures, en déterminant un temps requis pour passer d'un état initial audit état d'équilibre du bloc matriciel, par application des lois de déplacement diphasique, à partir dudit gradient de pression (Gx) et de données acquises à l'étape i).

**2.** Procédé selon l'une des revendications précédentes, dans lequel on estime le gradient de pression ($G_x$) au moyen des données suivantes :

- la vitesse de Darcy (u) du fluide au sein de ladite fracture ;
- la viscosité ($\mu$) dudit fluide ;
- la perméabilité de fracture ($k_{test}$) issue d'un test de puits.

**3.** Procédé selon l'une des revendications précédentes, dans lequel on calcule la saturation en fluide à l'équilibre au moyen des données suivantes :

- le contraste de masse volumique des fluides déplaçant et déplacé ;
- le pendage ($\alpha$) du bloc matriciel ;
- ledit gradient de pression ($G_x$) ;
- la dimension du bloc matriciel ($l_x$) dans la direction (x) d'écoulement de fracture.

**4.** Procédé selon l'une des revendications précédentes, dans lequel on estime le temps de récupération des hydrocarbures au moyen des données suivantes :

- les propriétés des fluides et les propriétés pétrophysiques d'écoulement au sein de la matrice , telles que : porosité et perméabilité matricielle, saturations initiales, pressions capillaires et perméabilités relatives ;
- la dimension du bloc matriciel ($l_x$) ;
- les conditions d'écoulement imposées dans ladite fracture, *i.e.* la différence de pression $\left( \Delta p_w^f = G_x l_x \right)$ ;
- la saturation d'équilibre final des blocs matriciels.

**5.** Procédé de récupération améliorée d'hydrocarbures contenus dans des blocs matriciels poreux d'un réservoir fracturé, lesdits blocs matriciels étant limités par des fractures, dans lequel on injecte un fluide au sein dudit réservoir, **caractérisé en ce que** l'on réalise les étapes suivantes pour au moins un bloc matriciel :

a) on sélectionne un ensemble de stratégies de récupération améliorée d'hydrocarbures ; et pour chaque stratégie :
b) on détermine un coefficient de récupération (CR) d'hydrocarbures et un temps de récupération au moyen du procédé selon l'une des revendications 1 à 4 ;
c) on sélectionne la stratégie de récupération améliorée permettant d'obtenir un coefficient de récupération (CR) d'hydrocarbures maximal pour un temps de récupération minimal.
d) on met en oeuvre ladite stratégie sélectionnée.

**6.** Procédé selon la revendication 5, dans lequel la stratégie de récupération améliorée est choisie parmi les stratégies suivantes :

- accroître ledit gradient de pression, ($G_x$) ;
- annuler une capillarité matricielle ;
- inverser une mouillabilité de la matrice.

**7.** Procédé selon la revendication 6, dans lequel

- on accroît ledit gradient de pression, ($G_x$) en faisant circuler un fluide visqueux dans les fractures ;
- on annule une capillarité matricielle en ajoutant au moins un agent chimique au fluide d'injection ;
- on inverse une mouillabilité de la matrice en ajoutant au moins un agent chimique au fluide d'injection.

**8.** Procédé selon l'une des revendications précédentes, dans lequel les données caractéristiques dudit réservoir sont choisies parmi : données de fracturation, propriétés de matrice et des fluides, conditions de circulation des fluides dans les fractures.

**9.** Procédé selon la revendication 8, dans lequel les données de fracturation sont des dimensions (ou longueurs) caractéristiques de bloc matriciel, et sont déduites d'espacements moyens entre fractures et/ou d'espacements entre discontinuités du milieu matriciel.

**10.** Procédé selon l'une des revendications 8 à 9, dans lequel les propriétés de matrice sont choisies parmi : perméabilité, porosité, saturations initiales en fluides, courbes de pression capillaire et de perméabilité relative aux fluides en présence.

**11.** Procédé selon l'une des revendications 8 à 10, dans lequel les propriétés des fluides sont les viscosités et/ou masses volumiques.

**12.** Procédé selon l'une des revendications 8 à 11, dans lequel les données relatives aux conditions de circulation des fluides dans les fractures sont des vitesses ou débits de fluide.

**13.** Procédé selon l'une des revendications précédentes, dans lequel les données issues de résultats de tests de puits sont des perméabilités.

**14.** Procédé selon l'une des revendications précédentes, dans lequel les données relatives à des conditions d'exploitation dudit réservoir sont des vitesses ou débits de fluide.

**Fig. 1**

**Fig. 2**

Europäisches
Patentamt

European
Patent Office

Office européen
des brevets

**RAPPORT DE RECHERCHE EUROPEENNE**

Numéro de la demande

EP 13 30 6684

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| X | F. Civan ET AL: "Parameters of matrix/fracture immiscible-fluids transfer obtained by modeling of core tests", June 2012 SPE Journal, 31 août 2006 (2006-08-31), pages 540-554, XP055081691, Mexico DOI: 10.2118/104028-PA Extrait de l'Internet: URL:http://www.nioclibrary.ir/latin-articles/122683.pdf [extrait le 2013-09-30] | 1,4,8-14 | INV. E21B43/26 E21B49/00 |
| Y | * page 544 - page 546; figures 2,6,7-9 * ----- | 2,3,5-7 | |
| Y | EVREN UNSAL ET AL: "Simulation of multiphase flow in fractured reservoirs using a fracture-only model with transfer functions", COMPUTATIONAL GEOSCIENCES, KLUWER ACADEMIC PUBLISHERS, DO, vol. 14, no. 4, 13 novembre 2009 (2009-11-13), pages 527-538, XP019816092, ISSN: 1573-1499 * figures 1,2,3,10 * ----- | 2 | DOMAINES TECHNIQUES RECHERCHES (IPC) E21B G01V |
| Y,D | BOURBIAUX B ET AL: "A RAPID AND EFFICIENT METHODOLOGY TO CONVERT FRACTURED RESERVOIR IMAGES INTO A DUAL-POROSITY MODEL", OIL & GAS SCIENCE & TECHNOLOGY: REVUE DE L'INSTITUT FRANCAIS DU PETROLE, EDITIONS TECHNIP. PARIS, FR, vol. 53, no. 6, 1 novembre 1998 (1998-11-01), pages 785-799, XP000831340, ISSN: 1294-4475 * figure 2 * ----- | 3 | |

-/--

Le présent rapport a été établi pour toutes les revendications

| Lieu de la recherche | Date d'achèvement de la recherche | Examinateur |
|---|---|---|
| La Haye | 30 avril 2014 | Dantinne, Patrick |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
........................................................................
& : membre de la même famille, document correspondant

EPO FORM 1503 03.82 (P04C02)

Europäisches
Patentamt

European
Patent Office

Office européen
des brevets

**RAPPORT DE RECHERCHE EUROPEENNE**

Numéro de la demande

EP 13 30 6684

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| Y | DEHGHAN A A ET AL: "Investigating the Fracture Network Effects on Sweep Efficiency during WAG Injection Process", TRANSPORT IN POROUS MEDIA, KLUWER ACADEMIC PUBLISHERS, DO, vol. 93, no. 3, 8 mars 2012 (2012-03-08), pages 577-595, XP035067461, ISSN: 1573-1634, DOI: 10.1007/S11242-012-9970-7 * figures 8,9-13,18 * ----- | 5-7 | |
| A | WO 2011/159109 A2 (IUCF HYU [KR]; SUNG WON-MO [KR]) 22 décembre 2011 (2011-12-22) * abrégé; figures 4,7,8 * ----- | 1-14 | |
| | | | DOMAINES TECHNIQUES RECHERCHES (IPC) |

Le présent rapport a été établi pour toutes les revendications

| Lieu de la recherche | Date d'achèvement de la recherche | Examinateur |
|---|---|---|
| La Haye | 30 avril 2014 | Dantinne, Patrick |

CATEGORIE DES DOCUMENTS CITES

X : particulièrement pertinent à lui seul
Y : particulièrement pertinent en combinaison avec un
autre document de la même catégorie
A : arrière-plan technologique
O : divulgation non-écrite
P : document intercalaire

T : théorie ou principe à la base de l'invention
E : document de brevet antérieur, mais publié à la
date de dépôt ou après cette date
D : cité dans la demande
L : cité pour d'autres raisons

&  : membre de la même famille, document correspondant

EPO FORM 1503 03.82 (P04C02)

**ANNEXE AU RAPPORT DE RECHERCHE EUROPEENNE
RELATIF A LA DEMANDE DE BREVET EUROPEEN NO.**

EP 13 30 6684

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

30-04-2014

| Document brevet cité au rapport de recherche | Date de publication | Membre(s) de la famille de brevet(s) | Date de publication |
|---|---|---|---|
| WO 2011159109 A2 | 22-12-2011 | KR 20110138088 A<br>US 2013124169 A1<br>WO 2011159109 A2 | 26-12-2011<br>16-05-2013<br>22-12-2011 |

Pour tout renseignement concernant cette annexe : voir Journal Officiel de l'Office européen des brevets, No.12/82

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- WO 10002680 A

- WO 10138558 A

**Littérature non-brevet citée dans la description**

- **REIS, J.C.** Oil Recovery Mechanisms in Fractured Reservoirs During Steam Injection. *paper SPE 20204 presented at the SPE/DOE EOR Conference,* 22 Avril 1990
- **JACK ALLAN ; S. QING SUN.** Controls on Recovery Factor in Fractured Reservoirs: Lessons Learned from 100 Fractured Fields, paper SPE 84590. *SPE Ann. Tech. Conf. & Exh. held,* 05 Octobre 2003
- **BARBARA PIRKER ; GEORG M. MITTERMEIR ; ZOLTAN E. HEINEMANN.** Numerivally-Derived Type Curves for Assessing Matrix Recovery Factors. *SPE Europec/EAGE Ann. Conf. & Exh. held,* 11 Juin 2007
- **R. GUPTA ; B. ADIBHATLA ; K.K. MOHANTY.** Parametric Study to Enhance Oil Recovery Rate From Fractured Oil-Wet Carbonate Reservoirs, paper SPE 116485. *2008 SPE Ann. Tech. Conf. & Exh. held,* 21 Septembre 2008

- **B. BOURBIAUX.** Understanding the Oil Recovery Challenge of Water Drive Fractured Reservoirs. *International Petroleum Technology Conference,* 07 Décembre 2009
- **NICOLAS LEGRAND ; JOOP DE KOK ; PASCALE NEFF ; TORSTEN CLEMENS ; OMV E&P.** Recovery Mechanisms and Oil Recovery From a Tight, Fractured Basement Reservoir, Yemen. *SPE Reservoir Evaluation & Engineering,* Août 2011
- **BOURBIAUX, B. ; CACAS, M.C. ; SARDA, S. ; SABATHIER, J.C.** A Rapid and Efficient Methodology to Convert Fractured Reservoir Images into a Dual-Porosity Model. *Revue de l'IFP,* Novembre 1998, vol. 53 (6), 785-799